Europäisches Patentamt

(19) European Patent Office          (11) Publication number: **0 009 365**

Office européen des brevets                                                    **A1**

(12) **EUROPEAN PATENT APPLICATION**

(21) Application number: **79301871.4**          (51) Int. Cl.³: **H 02 H 3/28,** H 02 H 7/04,
                                                        G 01 R 19/00
(22) Date of filing: **12.09.79**

(30) Priority: **18.09.78 ES 473457**          (71) Applicant: **ARTECHE, INSTRUMENTACION Y
                                                 SISTEMAS ELECTRONICOS, S.A., Carmelo de
                                                 Echegaray, 7., Munguia (Vizcaya) (ES)**

(43) Date of publication of application: **02.04.80**          (72) Inventor: **Llona, Jesus Gomez, Carmelo de Echegaray,
Bulletin 80/7**                                              **7.-Munguia (Vizcaya) (ES)**
                                                   Inventor: **Elizaran, Rodolfo di Pietro, Carmelo de
                                                   Echegaray, 7.-Munguia (Vizcaya) (ES)**

(84) Designated Contracting States: **AT BE CH DE FR GB IT          (74) Representative: **Prutton, Roger et al, MARKS & CLERK
LU NL SE**                                                  Alpha Tower A.T.V.Centre, Birmingham B1 1TT (GB)**

(54) **Transformer differential safety systems.**

(57) A transformer differential safety system includes a plurality of active power measuring converter circuits (4), one for each phase winding of the transformer. An array of adding circuits (5) combine the outputs of these circuits with the output of a copper and iron loss calculating circuit (11) in such a manner as to generate an output signal related to the difference between the transformer input and output power. A comparison circuit (6) provides a tripping output when this output signal exceeds a set level.

0009365

100530P

## DESCRIPTION

## "TRANSFORMER DIFFERENTIAL SAFETY SYSTEMS".

The present invention relates to a transformer safety system intended to detect internal failures in the windings of a transformer such as insulation break-down, short-circuits, and so on.

The chief purpose of the system is to take the transformer out of service when a failure arises, and above all to do so before such failure becomes serious, with a view to saving costs which might otherwise arise with repairing same, and from this it can be seen that there are two important properties that such a system must possess:

(a) reacting time, which should be as short as possibe, in order to arrest the development of the fault, and

(b) sensitivity, where the relay should be sensitive in order to detect small defects, that is to say, at an early stage in their development, but nonetheless being sufficiently stable, so as not to trip inopportunely through reasons other than a defect, such as might be passing short-circuits, voltage surges and so on.

Present systems for fault detection use differential current measurement, where in principle I primary = KI secondary, and K is a constant depending upon the transformation ratio, including both that of the transformer itself, as well as that of the instrument transformers.

This ratio, which is in principle accurate, is not so under certain conditions, such as:

(a) over-voltages which saturate the core and hence increase losses, thus distorting the transformation ratio,

(b) external short-circuits which saturate the instrument transformers, increasing the losses in the transformer, and thus likewise distorting the transformation ratio and

(c) transient connection effects, and so on.

In order to overcome the above effects, harmonic second filters require to be used, in order to achieve retarding that will prevent the safety equipment from tripping inopportunely. To all this must be added the choice of voltage regulating terminals as are provided on power transformers, because this can cause constant K to vary significantly.

Owing to all the above considerations the actual insensitivity displayed by present-day safety systems varies between 30% and 40%; that is to say, failures are not detected until their current value is that much above the current in the circuit at the time, and due to this, the transformer has usually suffered serious damage by the time it is disconnected from the supply.

The present invention endeavours to overcome this difficulty by the use of a new measuring system, based on a measurement of the active power which enters and leaves the transformer; that is to say, it is a differential active power measurement, and this enables a theoretical sensitivity of close on 100% to be achieved while in practice, due chiefly to inaccuracies in the instrument transformer, an insensitivity value of the order of 5% is obtained, even when voltage regulating terminals are included.

The measurement taken on the basis of the active power, overcomes to a great extent those difficulties which arise in the current system, since no account needs to be taken of assumed losses caused by the reactive current, which are much greater than those caused by the active current, when evaluating the apparent current under transitory conditions.

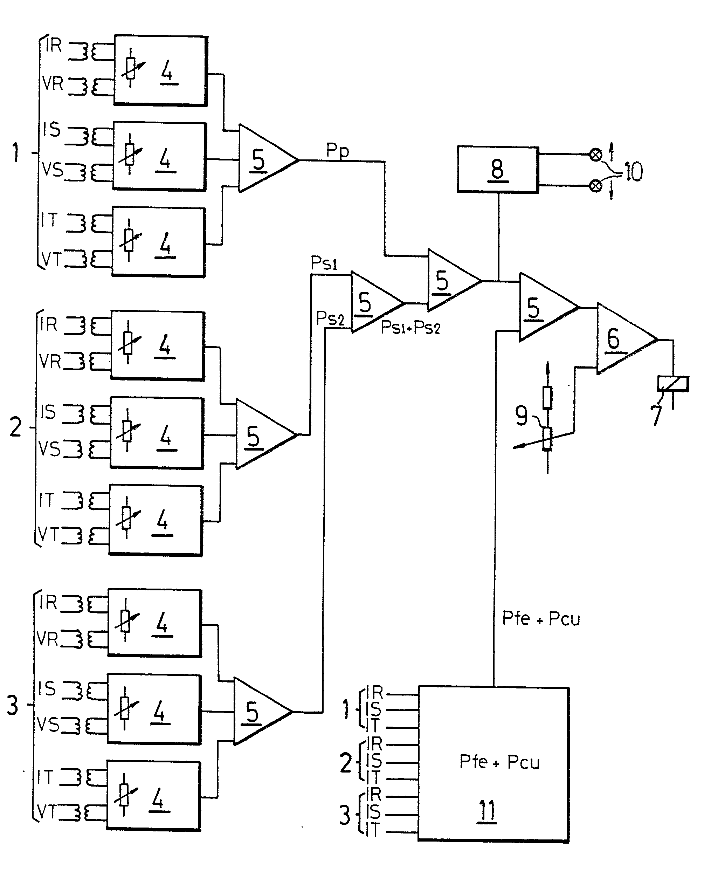

In the accompanying drawing, the sole Figure is the circuit diagram of an example of a system according to the invention, where notations as follows are used to show the items depicted therein:

1.- Primary winding of the transformer under surveillance.
2.- Secondary winding of the transformer.
3.- Tertiary winding of the transformer.
4.- Active power converter units with transformation ratio adjustment.
5.- Adding component.
6.- Comparison component.
7.- Tripping relay.
8.- Calibration adjustment.
9.- Sensitivity threshold adjustment.
10.- Luminescent diodes, optical indicators.
11.- Active iron and copper loss calculation circuit.
Pp. Primary active power.
Ps1. Secondary active power.
Ps2. Tertiary active power.
Pfe. Active iron losses.
Pcu. Active copper losses.
Pd. Power differential, where $Pd = Pp - (Ps1+Ps2) - (Pfe+Pcu)$.

The safety system being dealt with here is in accordance with the following equation:

$$Pp - Ps - Pfe - Pcu = 0$$

where:

　　　Ps = Secondary active power.
　　　Pp = Primary active power.
　　Pfe = Active iron losses.
　　Pcu = Active copper losses.

Under normal operating conditions, this equality is maintained. When an internal defect arises, such as a short-circuit between windings, etc., the fault which appears is resistive, and hence an increase in power results, this occurring in the primary active power (Pp), and not in the secondary active power (Ps), and so equality is no longer maintained, whereupon tripping out takes place as soon as the value exceeds the primary active power (Ps) by 5%.

The transformer differential safety system is comprised of nine active power converter units (4) arranged in groups of three for the transformer primary (1), secondary (2) and tertiary windings (3); and these three modules, together with their associated adding component (5), as may be seen from the accompanying diagram, evaluated Pp, Ps1 and Ps2.

The equation applicable to the equipment is as follows:

Power difference, Pd = Pp - (Ps1 + Ps2) - (Pfe + Pcu).

Therefore, Ps1 + Ps2 is calculated by means of the adding component (5) and afterwards Pp is subtracted, and the same applies to Pfe + Pcu.

Once this result has been obtained, it is compared by means of comparison component (6), with the sensitivity threshold (9) as referred to the nominal power, and tripping occurs if the power differential (Pd) is greater.

The following convention is used in order to cater for changes of sign, even when there is a change in the direction of the power flow:

All ingoing power values to the transformer are positive, and all outgoing ones are negative. In this way, if there is a change in the direction of the power flow, the balance in the equation remains unaltered. When the defect inside the transformer gives rise to a consumption by all the windings, the sign convention makes Pd (power differential) be the result of adding, and not subtracting, the ingoing powers, whereupon a tripping condition tends to be created.

With respect to the evaluation of losses (Pfe + Pcu), this is performed in the calculation circuit (11). Said losses can be compared to a value varying in accordance with the square of the current, that is to say $KI^2=Pfe+Pcu$, where K is a constant of proportionality.

Hence:

If the transformer is on permanent duty, there is no internal defect, and the currents are in phase, then by adding together the three R phase currents of the primary, secondary and tertiary windings, the total absolute value of all three is obtained.

If the S phase currents, and the T phase currents are each added up in the same way, three current values in all will be obtained, which, when added together will give a current value which is proportional to the currents which are flowing in the transformer, and when this is squared, the result is a $KI^2$ value which is proportional to the losses.

However, if because of some internal defect, a secondary or tertiary winding was consuming power, the currents of such winding would be out of phase by $180^o$, and when added up, the resulting value would be smaller. Hence, the power substracted for the active copper loses (Pcu) would be smaller, and a tripping condition would tend to be created.

In this way, a retarding effect is achieved for passing short-circuit conditions, during which time the copper losses increase sharply, and they decrease when the defect is an internal one.

Due to its electronic nature, this system also includes a set of own design high dynamic current transformers to avoid the need to employ ratio adaptor transformers in a wide range of current values $\pm$ 50%, where the $\pm$ 50% adjustment is accomplished by potentiometers.

The system is moreover fitted with an indicator system to assist with rating it, where luminescent diodes (10) and their associated circuit (8) are provided to attain the power balance condition under normal operation. This system is used for rating the transformer ratio adjustment potentiometers, thus simplifying the adjustment procedure of the equipment.

The system covered by this invention clearly provides transformer safety of a kind which is not affected by the value of the transformer in question, and this, together with the advantages already specified, affords a safety system that is suitable for use in conjunction with variable transformation ratio transformers, without the need for any other components.

In an alternative embodiment of the invention, (not illustrated) the functions of the active power converter units 4, the adding components 5), the comparison component 6 and the active iron and copper loss calculation circuit 11 may be wholly or partially carried out by one or more suitably programmed microprocessors.

CLAIMS

1.   A transformer differential safety system characterised
in that it is sensitive to the difference between the
ingoing and outgoing active power of the transformer.

2.   A transformer differential safety system as claimed in
claim 1 and characterised by incorporating a plurality of
active power measurement converter circuits, one for each
phase winding of the transformer, a plurality of adding
circuits which combine the outputs of said measurement
converter units and produce an output representing the active
power differential value and a comparison circuit which
receives the active power differential value output and
produces a tripping output when the value of said output
exceeds a predetermined level.

3.   A transformer differential safety system in accordance
with claim 2 characterised in that it includes a circuit
which is capable of calculating the transformer iron and
copper losses, whose output is fed into the associated adding units so as to be included in the differential active
power value calculation.

4.   A transformer differential safety system in accordance
with any preceding claim and characterised by transformation ratio adjustment potentiometers which remove the need
for any additional ratio adjustment transformers.

5.   A transformer differential safety systems, in accordance with claim 4 characterised by optical indicators for performing the power balance under normal conditions, and where, by means of same, the transformation ratio adjustment potentiometers can be rated, and thus enable the equipment to be made ready for operation without the need of any additional equipment.

6.   A transformer differential safety system in accordance with claim 5  characterised in that said optical indicators comprise luminescent diodes.

7.   A transformer differential safety system in accordance with claim 4 or 5 characterised in that since the system in question is not affected by the transformation ratio value, it can be applied to variable transformation ratio transformers without its characteristics being altered thereby, and without the need of any other equipment.

8.   A transformer differential safety system as claimed in claim 2 or claim 3 characterised in that said power conversion circuit, said adding circuits, said comparison circuit and (when dependent on claim 3) said loss calculating circuit are embodied in a circuit incorporating one or more suitably programmed microprocessors.

9.   A transformer differential safety system substantially as hereinbefore described with reference to the accompanying drawing.

European Patent
Office

**EUROPEAN SEARCH REPORT**

0009365
Application number

EP 79 301 871.4

## DOCUMENTS CONSIDERED TO·BE RELEVANT

| Category | Citation of document with indication, where appropriate, of relevant passages | Relevant to claim |
|---|---|---|
| X | AU – B – 468 253 (UNISEARCH) <br> * page 2, page 13, last 3 lines to page 14 * <br> & US – A – 3 754 163 <br> -- | 1,2,8 |
| X | US – A – 3 793 559 (D.J. RISTUCCIA) <br> * column 1, line 54 to column 2, line 7; column 2, line 30 to column 4, line 51; fig. 1, 2, 3 * <br> -- | 1-3,9 |
| | DE – A – 2 322 981 (ELIN-UNION AG) <br> * claim 1; fig. 1, position 4 * <br> -- | 4,5,7 |
| A | US – A – 3 832 600 (TH.R. SPECHT) <br> * abstract; fig. 5 * <br> ---- | |

**CLASSIFICATION OF THE APPLICATION (Int. Cl.3)**

H 02 H   3/28
H 02 H   7/04
G 01 R  19/00

**TECHNICAL FIELDS SEARCHED (Int.Cl.3)**

G 01 R  19/00
G 01 R  33/12
H 02 H   3/28
H 02 H   7/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | |
|---|---|---|
| Place of search <br> Berlin | Date of completion of the search <br> 13-12-1979 | Examiner <br> LEMMERICH |

EPO Form 1503.1   06.78